# EUROPÄISCHE PATENTSCHRIFT

(11) **EP 3 832 126 B1**
(45) Veröffentlichungstag und Bekanntmachung des Hinweises auf die Patenterteilung: **07.09.2022**
(21) Anmeldenummer: 19212825.4
(22) Anmeldetag: 02.12.2019
(51) Int. Cl.: B66C 13/08, F03D 1/06, B66C 1/10, F03D 13/10, F03D 13/40

(54) **VORRICHTUNG ZUM HANDHABEN EINER ROTORNABE UND VERFAHREN ZUR MONTAGE EINER ROTORNABE AN EINER GONDEL EINER WINDENERGIEANLAGE**
DEVICE FOR HANDLING A ROTOR HUB AND METHOD FOR ASSEMBLING A ROTOR HUB ON A NACELLE OF A WIND POWER PLANT
DISPOSITIF DE MANIPULATION D'UN MOYEU DE ROTOR ET PROCÉDÉ DE MONTAGE D'UN MOYEU DE ROTOR SUR UNE NACELLE D'UNE ÉOLIENNE

(43) Veröffentlichungstag der Anmeldung: 09.06.2021
(73) Patentinhaber: Nordex Energy SE & Co. KG, 22419 Hamburg (DE)
(72) Erfinder: Krohn, Matti, 18057 Rostock (DE); Jandt, Holger, 18147 Rostock (DE)
(74) Vertreter: Grünbaum, Annekathrin

(56) Entgegenhaltungen:
- EP-A2- 2 072 812
- WO-A1-2013/110417
- WO-A1-2015/032407
- WO-A1-2015/188836

## Beschreibung

Die vorliegende Erfindung betrifft eine Vorrichtung zum Handhaben einer Rotornabe. Gegenstand der Erfindung sind insbesondere Lastaufnahmemittel zum Heben/Senken und Drehen einer Rotornabe. Weiterhin befasst sich die Erfindung mit einem Verfahren zur Montage einer Rotornabe an einer Gondel einer Windenergieanlage.

Eine Windenergieanlage ist üblicherweise aus einzelnen Komponenten mit einer hohen Masse und sehr großen Abmessungen zusammengesetzt. Die Komponenten können beispielsweise einzelne Teile des Turms, das Maschinenhaus (Gondel), die Rotornabe und die Rotorblätter umfassen. Diese genannten Komponenten werden üblicherweise vormontiert, auf eine Transportvorrichtung verbracht und an dieser befestigt. Die Transportvorrichtung mit beispielsweise der Rotornabe wird mit handelsüblichen Trailern und Schwerlast-LKW auf der Straße oder mittels Frachtschiffen auf dem Seeweg transportiert. Die Rotornabe wird üblicherweise in einer Transportposition mit einer im Wesentlichen vertikalen Ausrichtung der Nabenachse am Aufstellungsort der Windenergieanlage angeliefert.

Für die Errichtung einer Windenergieanlage sind Lastaufnahmemittel notwendig, mittels welchen beispielsweise die Rotornabe von dem Transportfahrzeug bzw. der Transportvorrichtung gehoben und gedreht werden kann, sodass die Rotornabe aus einer Transportposition mit einer im Wesentlichen vertikalen Ausrichtung der Nabenachse in eine Errichtungsposition mit einer im Wesentlichen horizontalen Ausrichtung der Nabenachse kommt. Die Nabe weist einen Wellenflansch auf. Dieser dient der Montage der Nabe an die Gondel. Die Nabenachse ist die Rotationsachse. Die erfindungsgemäße Vorrichtung stellt dazu eine Verbindung zwischen dem zu hebenden Teil und zwei Kränen her.

Bei der Montage einer Windenergieanlage muss die Rotornabe an einer bereits auf einem Turm oder Mast montierten Gondel bzw. einem Gondelteil montiert werden.

WO 2013/110417 A1 offenbart eine Handhabungsvorrichtung zum Heben einer Rotornabe mittels eines Krans, wobei die Handhabungsvorrichtung derart vorbereitet ist, dass sich die Rotornabe beim Anheben an einem Befestigungssegment der Handhabungsvorrichtung von einer vertikalen Ausrichtung mit einer im Wesentlichen vertikalen Nabenachse zu einer horizontalen Ausrichtung mit einer im Wesentlichen horizontalen Nabenachse dreht.

In EP 2505823 B1 ist ein Transportrahmen für eine Rotornabeneinheit einer Windenergieanlage offenbart, wobei der Transportrahmen einen Hauptträger zum Tragen des Gewichts der Rotornabeneinheit; erste und zweite seitliche Stabilisierungselemente; eine Haltevorrichtung zum Befestigen der Rotornabeneinheit an dem Transportrahmen und drei Befestigungspunkte für eine Hebevorrichtung an den seitlichen Stabilisierungselementen aufweist.

In der Druckschrift WO 2015032407 A1 ist ein Drehständer zum Drehen einer Rotornabe offenbart, welcher die Rotornabe aus einer Position, in der ihre voraussichtliche Drehachse vertikal ausgerichtet ist, in eine Position drehen kann, in der ihre voraussichtliche Drehachse schräg oder quer zu einer vertikalen Ausrichtung ausgerichtet ist. Der Drehständer besteht aus einem Grundrahmen, einem gebogenen Tragrahmen und einer zweiten Befestigungsstruktur zur Anbringung einer Hubvorrichtung an der Rotornabe. Der Grundrahmen hat eine Stützebene und eine erste Befestigungsstruktur zur Befestigung an einem Rotorwellenglied einer Rotornabe, wobei die Stützebene und die erste Befestigungsstruktur auf gegenüberliegenden Seiten des Grundrahmens angeordnet sind. Der gebogene Tragrahmen besteht aus einem gebogenen Rahmenteil und einem geraden Rahmenteil mit einem gebogenen bzw. einem geraden Tragflächenabschnitt. Der gerade Rahmenabschnitt mit dem geraden Stützflächenabschnitt ist seitlich der voraussichtlichen Drehachse der Rotornabe angeordnet und der gerade Stützflächenabschnitt ist um weniger als 15° zur voraussichtlichen Drehachse der Rotornabe abgewinkelt. Der gekrümmte Rahmenabschnitt ist zwischen dem Grundrahmen und dem geraden Rahmenabschnitt so verbunden, dass sich der gekrümmte Stützflächenabschnitt von der Stützebene zum geraden Stützflächenabschnitt krümmt. Die zweite Befestigungsstruktur ist seitlich zur voraussichtlichen Drehachse der Rotornabe angeordnet und befindet sich auf einer der Position der Rotornabe gegenüberliegenden Seite des geraden Rahmenabschnitts. Die Druckschrift WO 2015032407 A1 stellt ferner ein Verfahren zum Drehen einer Rotornabe aus einer Position, in der ihre prospektive Drehachse vertikal ausgerichtet ist, in eine Position bereit, in der ihre prospektive Drehachse schräg oder quer zu einer vertikalen Ausrichtung ausgerichtet ist. Eine Rotornabe wird in einem Drehgestell bereitgestellt, wobei ein Rotorwellenglied der Rotornabe an der ersten Befestigungsstruktur befestigt ist. Die zweite Befestigungsstruktur ist an der Rotornabe befestigt. Eine Hebevorrichtung ist an der zweiten Befestigungsstruktur angebracht und hebt die zweite Befestigungsstruktur an, wodurch die Rotornabe auf dem gekrümmten Auflageflächenabschnitt abrollt, bis die voraussichtliche Drehachse der Rotornabe in einem Winkel zum Boden ausgerichtet ist, der dem Winkel der Drehachse der Rotorwelle zum Boden entspricht.

Die Erfindung der Druckschrift WO2015188836A1 betrifft eine Hebevorrichtung und ein Verfahren zum Heben und Drehen eines Rotors während des Errichtungsprozesses einer Windturbinenstruktur. Die Hebevorrichtung umfasst eine Basiseinheit mit Befestigungsmitteln, die an einer Außenfläche der Nabe angebracht werden können. Die Hebevorrichtung ist in der Lage, den Rotor mit Hilfe eines schwenkbaren Hebearms, der zwischen zwei Endplatten angeordnet ist, oder einer beweglichen Laufkatzenbaugruppe, die auf einer Schiene der Basiseinheit angeordnet ist, zu drehen. Über ein Aggregat oder ein anderes Aggregat wird die Dreheinheit angetrieben, die den Rotor um einen Drehpunkt in eine Einbaulage dreht. Der Hebepunkt ist auf den Schwerpunkt des Rotors ausgerichtet, um einen ausgeglichenen Hub zu gewährleisten.

Die Druckschrift EP2072812A2 offenbart ein Verfahren zum Handhaben einer Rotornabe einer Windenergieanlage oder zum Handhaben eines Rotors einer Windenergieanlage mittels einer Hebeeinrichtung, insbesondere beim Errichten einer Windenergieanlage oder bei der Montage oder Demontage eines Rotors einer Windenergieanlage an einer Windenergieanlage, wobei insbesondere eine Rotornabe oder ein Rotor mit einer Montageseite an einem Turm einer Windenergieanlage angeordnet wird oder ist, wobei die Rotornabe oder der Rotor mittels der Hebeeinrichtung angehoben oder gehalten wird. Die Rotornabe wird im angehobenen Zustand mittels einer an der Rotornabe angreifenden Kippeinrichtung aus der ursprünglichen angehobenen Lage um einen vorbestimmten Kippwinkel gekippt oder der Rotor wird mittels einer an der den Rotorblattwurzeln der Rotorblätter des Rotors angreifenden Kippeinrichtung aus der ursprünglichen angehobenen Lage um einen vorbestimmten Kippwinkel gekippt.

### Darstellung der Erfindung

Der Erfindung liegt die Aufgabe zugrunde, eine Vorrichtung zu entwickeln, die es ermöglicht, eine Rotornabe aus einer Transportposition mit einer im Wesentlichen vertikalen Ausrichtung der Nabenachse in eine Errichtungsposition mit einer im Wesentlichen horizontalen Ausrichtung der Nabenachse zu drehen, aus welcher die Rotornabe gehoben/gesenkt und an der vormontierten Gondel der Windenergieanlage montiert werden kann. Weiterhin ist es die Aufgabe, ein Verfahren zur Montage der Rotornabe an einer Gondel einer Windenergieanlage zu entwickeln.

Weiterhin soll diese Vorrichtung beim Rückbau der Windenergieanlage oder Servicearbeiten an der Windenergieanlage das Absenken und das Drehen der Rotornabe aus der Errichtungsposition mit einer im Wesentlichen horizontalen Ausrichtung der Nabenachse in die Transportposition mit einer im Wesentlichen vertikalen Ausrichtung der Nabenachse ermöglichen.

Die Lösung der Aufgabe erfolgt mit den Merkmalen des Haupt- und Nebenanspruchs, wobei die Unteransprüche weitere Ausgestaltungen beschreiben.

Die erfindungsgemäße Vorrichtung zum Handhaben einer Rotornabe mit Hilfe von Kränen umfasst wenigstens zwei Lastaufnahmemittel. Die Rotornabe weist einen Grundkörper, eine Nabenachse, einen Wellenflansch und drei Rotorblattöffnungen, welche jeweils einen Blattflansch aufweisen. Mittels des Wellenflansches wird die Rotornabe an die Rotorwelle der Gondel montiert. Die Lastaufnahmemittel sind derart gestaltet, dass sich die Rotornabe beim Anheben der Vorrichtung aus einer Transportposition mit einer im Wesentlichen vertikalen Ausrichtung der Nabenachse in eine Errichtungsposition mit einer im Wesentlichen horizontalen Ausrichtung der Nabenachse dreht. Erfindungsgemäß bestehen ein erstes Lastaufnahmemittel aus einer Traglasche und ein zweites Lastaufnahmemittel aus einem Wendegestell. Die Traglasche ist mit dem Grundkörper der Rotornabe zwischen jeweils zwei Rotorblattöffnungen lösbar verbunden und das Wendegestell ist der Traglasche gegenüberliegend mit einem Lochkreis des Blattflansches der dritten Rotorblattöffnung lösbar verbunden.

In einer Ausgestaltung weist die Traglasche eine Grundplatte mit Bohrungen zum Verschrauben der Traglasche auf dem Grundkörper der Rotornabe auf. Auf der Grundplatte im rechten Winkel zu dieser ist eine Anschlagplatte mit einem Auge zum Anschlagen eines Hauptkrans angeordnet. Die Anschlagplatte ist fest mit der Grundplatte verbunden und kann mit den üblichen maschinenbaulichen Techniken, wie Schweißen, Kleben usw. angebracht sein.

In einer weiteren Ausgestaltung weist das Wendegestell zwei, sich parallel gegenüberliegende Bodenplatten auf, welche an einem Ende unter einem definierten Winkel mit zwei Längsträgern verbunden sind. Die Längsträger ihrerseits sind durch wenigstens zwei Querträger miteinander verbunden. Auf zwei Querträgern sind Adapterplatten für eine Verbindung mit dem Blattflansch der dritten Rotorblattöffnung lösbar angeordnet. Der Übergang zwischen den Bodenplatten und den Längsträgern ist mit einer Rundung versehen. Das Wendegestell weist wenigstens ein Auge an den der Rundung gegenüber liegenden Enden der Längsträger zum Anschlagen an einen Nachführkran auf, wobei in der Regel zwei Anschlagaugen an einem dritten Querträger zwischen den Längsträgern oder an jeweils einem Längsträger ein Auge angeordnet sein können.

In einer weiteren Ausführung sind die Bodenplatten und die Längsträger durch vertikale Stützen miteinander verbunden.

Um den Blattflansch der dritten Rotorblattöffnung der Rotornabe mit dem Wendegestell verbinden zu können, sind in einer weiteren Ausführung die Adapterplatten mit Bohrungen versehen, welche einen Lochkreis aufweisen, der mit dem zu verbindenden Blattflansch korrespondiert.

In einer weiteren Ausführung bestehen das oder die Lastaufnahmemittel aus Stahlblech.

Das erfindungsgemäße Verfahren zur Montage einer Rotornabe an einer Gondel einer Windenergieanlage mit einer Vorrichtung zum Handhaben einer Rotornabe mit Hilfe von Kränen und unter Nutzung der vorgenannten erfindungsgemäßen Vorrichtung erfolgt mit den Schritten
- Bereitstellen der Rotornabe in einer Transportposition mit einer im Wesentlichen vertikalen Ausrichtung der Nabenachse, wobei die Rotornabe auf dem Wellenflansch abgestellt wird;
- Bereitstellen der Traglasche und des Wendegestells, wobei das Wendegestell mit entsprechend dem Lochkreis des Blattflansches der dritten Rotorblattöffnung korrespondierenden Adapterplatten vormontiert ist;
- Montage der Traglasche auf einem korrespondierenden Lochblech zwischen zwei Rotorblattöffnungen auf dem Grundkörper der Rotornabe;
- Montage des Wendegestells der Traglasche gegenüberliegend auf dem Blattflansch der dritten Rotorblattöffnung;
- Anschlagen der Traglasche an den Hauptkran;
- Anschlagen des Wendegestells an den Nachführkran;
- Anheben der Rotornabe durch den Hauptkran und gleichzeitiges Drehen der Rotornabe aus der Transportposition mit einer im Wesentlichen vertikalen Ausrichtung der Nabenachse in eine Errichtungsposition mit einer im Wesentlichen horizontalen Ausrichtung der Nabenachse unter Führung des Nachführkrans, wobei beim Anheben der Rotornabe das Wendegestell über die Rundung zwischen den Bodenplatten und den Längsträgern abdreht;
- Abstellen der Rotornabe auf dem Wendegestell im erforderlichen Montagewinkel;
- Demontage des Wendegestells;
- Anheben der Rotornabe RN zur Montage an der Gondel der Windenergieanlage mittels des Hauptkrans.

Mit Hilfe der erfindungsgemäßen Vorrichtung zum Handhaben einer Rotornabe kann die Rotornabe, beispielsweise bei der Errichtung der Windenergieanlage, aus einer Transportposition mit einer im Wesentlichen vertikalen Ausrichtung der Nabenachse in eine Errichtungsposition mit einer im Wesentlichen horizontalen Ausrichtung der Nabenachse gedreht werden.

Die erfindungsgemäße Vorrichtung zum Handhaben einer Rotornabe kann auch für den Rückbau der Windenergieanlage oder für Servicearbeiten an der Windenergieanlage eingesetzt werden. Ebenso ist eine Zulassung für den internen Baustellentransport möglich und die Rotornabe kann in der Errichtungsposition auf dem Wendegestell, wenn nötig, einige Tage stehen gelassen werden.

### Ausführung der Erfindung

Die Erfindung wird anhand eines Ausführungsbeispiels erläutert. Hierzu zeigen
- Figur 1: die zu handhabende Rotornabe RN mit der erfindungsgemäßen Vorrichtung in einer perspektivischen Darstellung;
- Figur 2: ein erstes Lastaufnahmemittel in Form einer Traglasche;
- Figur 3: ein zweites Lastaufnahmemittel in Form eines Wendegestells;
- Figur 4a-4d: die Handhabung der Vorrichtung mit Rotornabe.

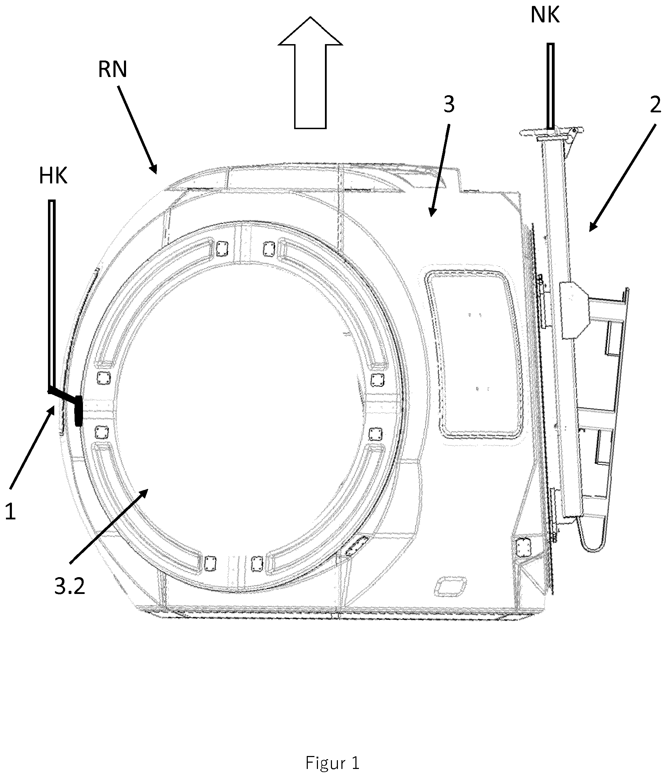

Figur 1 zeigt die zu handhabende Rotornabe RN mit der erfindungsgemäßen Vorrichtung in einer perspektivischen Darstellung. Die Vorrichtung besteht aus zwei Lastaufnahmemitteln, wobei ein erstes Lastaufnahmemittel eine Traglasche 1 ist. Die Traglasche 1 wird über Schraubverbindungen mit dem Grundkörper 3 der Rotornabe RN lösbar verbunden. Die Rotornabe RN ist beim Transport auf dem Wellenflansch mit einer im Wesentlichen vertikalen Nabenachse gelagert. Der Anschlagpunkt 3.1 für die Traglasche 1 befindet sich an dem Grundkörper 3 der Rotornabe RN zwischen zwei Rotorblattöffnungen 3.2. Die Traglasche 1 weist ein Auge 1.4 für die Durchführung eines Schäkels zum Anschlagen der Rotornabe RN an einem Hauptkran HK auf. Ein zweites Lastaufnahmemittel ist ein Wendegestell 2, welches auf dem Lochkreis eines Blattflansches 3.3 oder eines Extenders verschraubt wird. Zwischen dem Wendegestell 2 und dem Blattflansch 3.3 befindet sich eine austauschbare Schnittstelle, welche eine Anpassung an verschiedene Lochkreise und verschiedene Durchmesser diverser Baureihen von Rotornaben RN über eine oder mehrere Adapterplatten 4 ermöglicht. Die entsprechenden Adapterplatten 4 werden auf dem Wendegestell 2 montiert. Das Wendegestell 2 ist ebenfalls mit einem Auge 2.10 für die Durchführung eines Schäkels zum Anschlagen der Rotornabe RN an einen Nachführkran NK versehen. Dementsprechend erfolgt erfindungsgemäß das Handhaben der Rotornabe RN mittels zweier Kräne, einem Hauptkran HK und einem Nachführkran NK.

Die Lastaufnahmemittel, die Traglasche 1 und das Wendegestell 2, bestehen aus Stahlblech und sind in ihrer Dimensionierung prinzipiell sowohl der Größe einer zu handhabenden Rotornabe RN als auch den Erfordernissen des zu benutzenden Transportmittels angepasst.

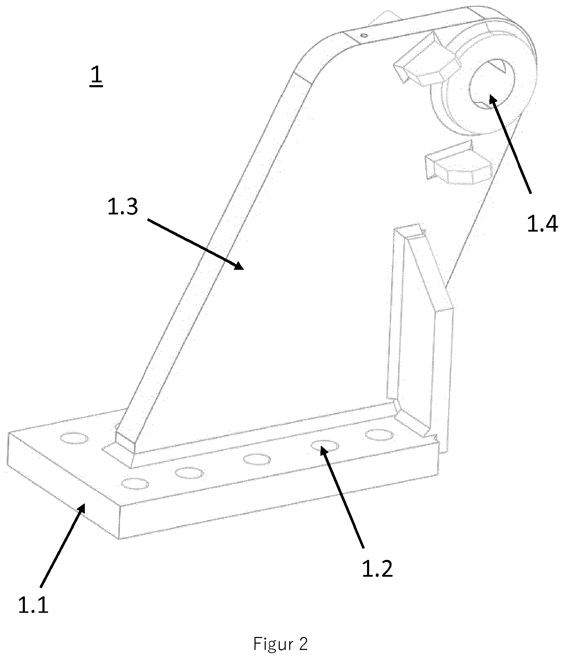

In Figur 2 ist das erste Lastaufnahmemittel in Form der Traglasche 1 zu sehen. Die Traglasche 1 besteht aus einer Grundplatte 1.1 mit Bohrungen 1.2 zum Verschrauben der Traglasche 1 auf dem Grundkörper 3 der Rotornabe RN mit einem korrespondierenden Lochblech 3.4 zwischen zwei Rotorblattöffnungen 3.2. Auf der Grundplatte 1.1 befindet sich im rechten Winkel zur Grundplatte 1.1 eine Anschlagplatte 1.3 mit dem Auge 1.4 zum Anschlagen an den Hauptkran HK.

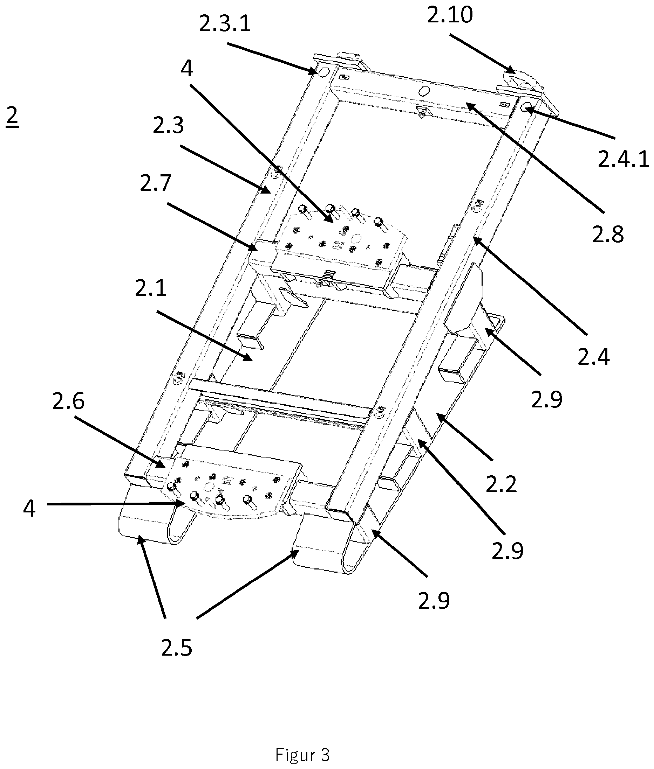

In Figur 3 wird das zweite Lastaufnahmemittel in Form des Wendegestells 2 gezeigt. Das Wendegestell 2 besteht aus zwei, sich parallel gegenüberliegenden Bodenplatten 2.1 und 2.2, welche an einem Ende unter einem definierten Winkel, welcher einem erforderlichen Montagewinkel der Rotornabe RN zur vormontierten Gondel entspricht, in zwei Längsträger 2.3 und 2.4 übergehen. Der Winkel zwischen den zwei Bodenplatten 2.1 und 2.2 und den zwei Längsträgern 2.3 und 2.4 ist an den Konuswinkel der Rotornabe RN angepasst. Der Übergang zwischen den Bodenplatten 2.1 und 2.2 und den Längsträgern 2.3 und 2.4 ist für eine bessere Handhabung des Wendegestells 2 abgerundet (Rundung 2.5), sodass beim Anheben der Rotornabe RN mit dem Wendegestell 2 ein Abdrehen über diese Rundung 2.5 erfolgen kann. Die Längsträger 2.3 und 2.4 sind an dem der Rundung 2.5 entgegengesetzten Enden 2.3.1, 2.4.1 länger als die Bodenplatten 2.1 und 2.2. Die Längsträger 2.3 und 2.4 sind durch wenigstens zwei Querträger 2.6 und 2.7 miteinander verbunden und ein dritter Querträger 2.8 verbindet für eine bessere Stabilität die längeren Enden 2.3.1, 2.4.1 miteinander. An den Enden 2.3.1, 2.4.1 der Längsträger 2.3, 2.4 oder direkt am dritten Querträger 2.8 befinden sich in dieser Ausführung zwei Augen 2.10 zum Anschlagen des Nachführkrans NK. Auf den Querträgern 2.6 und 2.7 sind die Adapterplatten 4 lösbar, beispielsweise durch Verschraubung, angeordnet. Dazu sind die Adapterplatten 4 mit Bohrungen 4.1 versehen, welche mit dem Lochkreis des Blattflansches 3.3 der dritten Rotorblattöffnung 3.2 korrespondieren. Zwischen den Querträgern 2.6, 2.7 und den Längsträgern 2.3, 2.4 kann eine Begehplattform angeordnet sein. Die Bodenplatten 2.1 und 2.2 und die Längsträger 2.3 und 2.4 sind für eine bessere Stabilität durch vertikale Stützen 2.9 miteinander verbunden. In dem Ausführungsbeispiel sind sechs Stützen 2.9 gezeigt, es sollten aber mindestens vier Stützen 2.9 auf der Höhe der Querträger 2.6 und 2.7 entsprechend angeordnet sein.

Die Rotornabe RN wird üblicherweise auf einer Transportvorrichtung zum Aufstellungsort der Windenergieanlage transportiert und dort zunächst in der Transportposition mit einer im Wesentlichen vertikalen Nabenachse nahe einer sogenannten Kranstellfläche gelagert. Dabei ist es unerheblich, ob an der Rotornabe RN der GFK-Spinner vollständig montiert ist oder nicht. Ist der GFK-Spinner montiert, muss die Luke im GFK-Spinner zur Kranerrichtung frei gehalten werden.

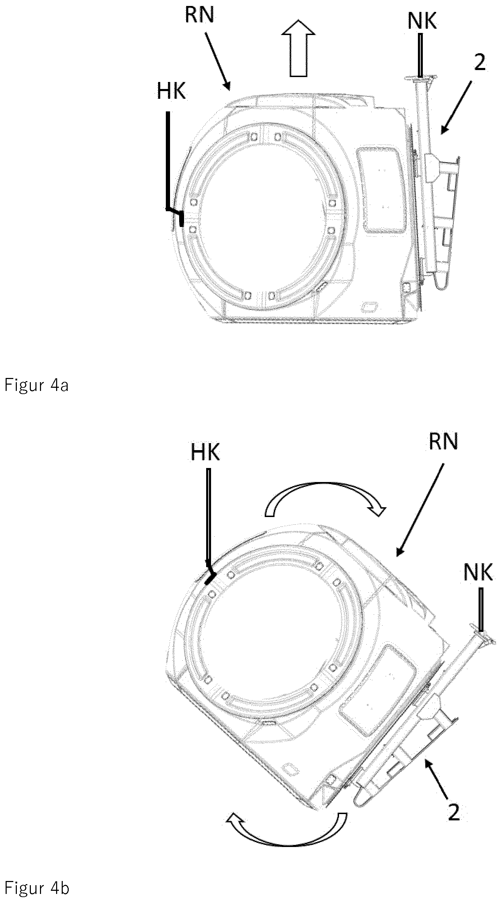

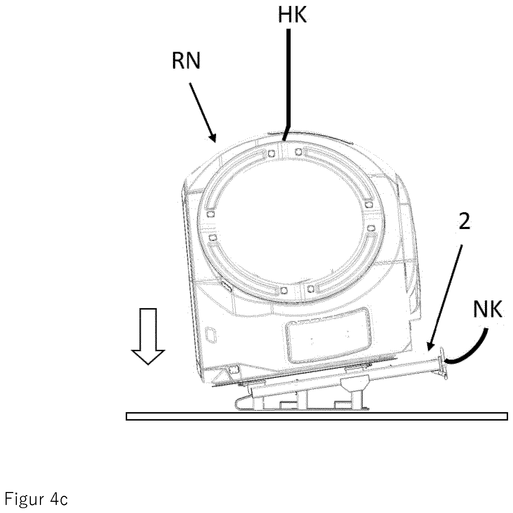

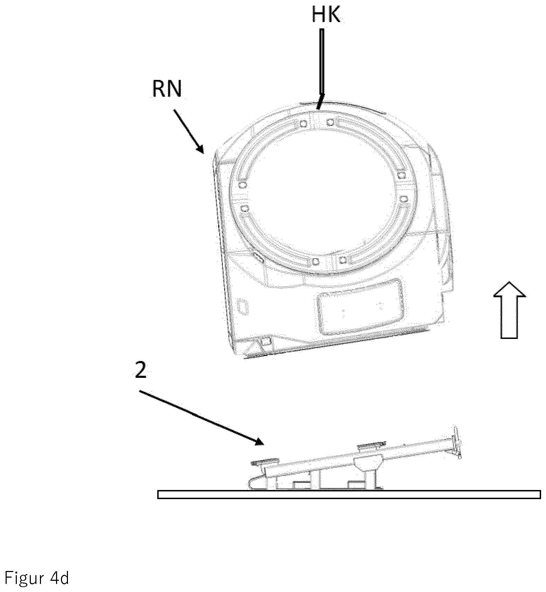

Die Rotornabe RN ist in der Regel auf dem Wellenflansch lagernd in der Transportposition mit einer im Wesentlichen vertikalen Nabenachse bereitgestellt. Die bereitgestellten Lastaufnahmemittel, in diesem Fall die Traglasche 1 und das Wendegestell 2 mit den entsprechenden montierten Adapterplatten 4, die mit dem Lochkreis des Blattflansches 3.3 der dritten Rotorblattöffnung 3.2 korrespondieren, werden am Aufstellungsort der Windenergieanlage an der Rotornabe RN befestigt. Die Traglasche 1 wird auf einem korrespondierenden Lochblech 3.4 zwischen zwei Rotorblattöffnungen 3.2 auf dem Grundkörper 3 der Rotornabe RN verschraubt. Das Wendegestell 2 wird der Traglasche 1 gegenüberliegend auf dem Blattflansch 3.3 der dritten Rotorblattöffnung 3.2 verschraubt. Die Kranseile des Hauptkrans HK und des Nachführkrans NK werden an den entsprechenden Augen 1.4 und 2.10 der Traglasche 1 und des Wendegestells 2 angeschlagen. In den Figuren 4a bis 4d wird das Wenden und das Anheben der Rotornabe RN gezeigt. Figur 4a zeigt die Ausgangsposition nach dem Montieren des Wendegestells 2 und der Traglasche 1. Durch die Aufwärtsbewegung des Kranseils des Hauptkrans HK wird die Rotornabe RN unter Führung des Nachführkrans NK (Figur 4b) solange aus der Transportposition mit einer im Wesentlichen vertikalen Ausrichtung der Nabenachse in die Errichtungsposition mit einer im Wesentlichen horizontalen Ausrichtung der Nabenachse gedreht bis die Rotornabe RN auf dem Wendegestell 2 im erforderlichen Montagewinkel abgestellt werden kann. (Figur 4b) Die Rundung 2.5 zwischen den Bodenplatten 2.1, 2.2 und den Längsträgern 2.3, 2.4 des Wendegestells 2 erleichtert die Drehung. Durch den Winkel zwischen den Bodenplatten 2.1, 2.2 und den Längsträgern 2.3, 2.4 des Wendegestells 2 hat die Rotornabe RN eine optimale Ausrichtung für die spätere Montage. Anschließend werden die Schraubverbindungen am Wendegestell 2 gelöst und der Hauptkran HK transportiert die Rotornabe RN im erforderlichen Montagewinkel zur vormontierten Gondel der Windenergieanlage (Figur 4d), wo die Rotornabe RN nachfolgend montiert werden kann.

Da es sich bei der vorhergehenden, detailliert beschriebenen Vorrichtung zum Handhaben einer Rotornabe um ein Ausführungsbeispiel handelt, kann diese in üblicher Weise vom Fachmann in einem weiten Umfang modifiziert werden, ohne den Bereich der Erfindung zu verlassen. Insbesondere können auch die konkreten Ausgestaltungen der Lastaufnahmemittel in anderer Form als in der hier beschriebenen folgen. Beispielsweise kann das Wendegestell 2 in einer anderen Form ausgestaltet werden, wenn dies aus konstruktiven bzw. designerischen Gründen notwendig ist. Weiter schließt die Verwendung der unbestimmten Artikel "ein" bzw. "eine" nicht aus, dass die betreffenden Merkmale auch mehrfach vorhanden sein können.

## Patentansprüche

1. Vorrichtung zum Handhaben einer Rotornabe (RN) mit Hilfe von Kränen, wobei die Rotornabe (RN) einen Grundkörper (3), eine Nabenachse, drei Rotorblattöffnungen (3.2), welche jeweils einen Blattflansch (3.3) aufweisen, und einen Wellenflansch umfasst,
wobei die Vorrichtung wenigstens zwei Lastaufnahmemittel umfasst, welche derart gestaltet sind, dass sich die Rotornabe (RN) beim Anheben der Vorrichtung aus einer Transportposition mit einer im Wesentlichen vertikalen Ausrichtung der Nabenachse in eine Errichtungsposition mit einer im Wesentlichen horizontalen Ausrichtung der Nabenachse dreht, **dadurch gekennzeichnet, dass**
ein erstes Lastaufnahmemittel aus einer Traglasche (1) und ein zweites Lastaufnahmemittel aus einem Wendegestell (2) besteht,
wobei die Traglasche (1) mit dem Grundkörper (3) der Rotornabe (RN) zwischen zwei Rotorblattöffnungen (3.2) lösbar verbunden ist, und
das Wendegestell (2) der Traglasche (1) gegenüberliegend mit einem Lochkreis des Blattflansches (3.3) der dritten Rotorblattöffnung (3.2) lösbar verbunden ist.

2. Vorrichtung nach Anspruch 1 **dadurch gekennzeichnet, dass** die Traglasche (1) eine Grundplatte (1.1) mit Bohrungen (1.2) zum Verschrauben der Traglasche (1) auf dem Grundkörper (3) der Rotornabe (RN) und auf der Grundplatte (1.1) im rechten Winkel zu dieser eine Anschlagplatte (1.3) mit einem Auge (1.4) zum Anschlagen an einen Hauptkran (HK) aufweist.

3. Vorrichtung nach Anspruch 1 **dadurch gekennzeichnet, dass** das Wendegestell (2) zwei, sich parallel gegenüberliegenden Bodenplatten (2.1, 2.2) aufweist, welche an einem Ende unter einem definierten Winkel in zwei Längsträger (2.3, 2.4) übergehen, und dass die Längsträger (2.3, 2.4) durch wenigstens zwei Querträger (2.6, 2.7) miteinander verbunden sind, wobei die Querträger (2.6, 2.7) mit Adapterplatten (4) für eine Verbindung mit dem Blattflansch (3.3) der dritten Rotorblattöffnung (3.2) lösbar verbunden sind, und dass das Wendegestell (2) wenigstens ein Auge (2.10) zum Anschlagen an einen Nachführkran (NK) aufweist.

4. Vorrichtung nach Anspruch 3 **dadurch gekennzeichnet, dass** der Übergang zwischen den Bodenplatten (2.1, 2.2) und den Längsträgern (2.3, 2.4) mit einer Rundung (2.5) versehen ist.

5. Vorrichtung nach Anspruch 3 oder 4 **dadurch gekennzeichnet, dass** die Bodenplatten (2.1, 2.2) und die Längsträger (2.3, 2.4) durch vertikale Stützen (2.9) miteinander verbunden sind.

6. Vorrichtung nach Anspruch 3 **dadurch gekennzeichnet, dass** die Adapterplatten (4) mit Bohrungen (4.1) versehen sind, welche mit dem Lochkreis des Blattflansches (3.3) der dritten Rotorblattöffnung (3.2) korrespondieren.

7. Vorrichtung nach einem der vorhergehenden Ansprüche **dadurch gekennzeichnet, dass**
das oder die Lastaufnahmemittel aus Stahlblech bestehen.

8. Verfahren zur Montage einer Rotornabe (RN) an einer Gondel einer Windenergieanlage mit einer Vorrichtung zum Handhaben einer Rotornabe (RN) mit Hilfe von Kränen nach den Ansprüchen 1 bis 7 mit den Schritten
- Bereitstellen der Rotornabe (RN) in einer Transportposition mit einer im Wesentlichen vertikalen Ausrichtung der Nabenachse;
- Bereitstellen der Traglasche (1) und des Wendegestells (2), wobei das Wendegestell (2) mit entsprechend dem Lochkreis des Blattflansches (3.3) der dritten Rotorblattöffnung (3.2) korrespondierenden Adapterplatten (4) vormontiert ist;
- Montage der Traglasche (1) auf einem korrespondierenden Lochblech (3.4) zwischen zwei Rotorblattöffnungen (3.2) auf dem Grundkörper (3) der Rotornabe (RN);
- Montage des Wendegestells (2) der Traglasche (1) gegenüberliegend auf dem Blattflansch (3.3) der dritten Rotorblattöffnung (3.2);
- Anschlagen der Traglasche (1) an den Hauptkran (HK);
- Anschlagen des Wendegestells (2) an den Nachführkran (NK);
- Anheben der Rotornabe (RN) durch den Hauptkran (HK) und gleichzeitiges Drehen der Rotornabe (RN) aus der Transportposition mit einer im Wesentlichen vertikalen Ausrichtung der Nabenachse in eine Errichtungsposition mit einer im Wesentlichen horizontalen Ausrichtung der Nabenachse unter Führung des Nachführkrans (NK), wobei beim Anheben der Rotornabe (RN) das Wendegestell (2) über die Rundung (2.5) zwischen den Bodenplatten (2.1, 2.2) und den Längsträgern (2.3, 2.4) abdreht;
- Abstellen der Rotornabe (RN) auf dem Wendegestell (2) im erforderlichen Montagewinkel;
- Demontage des Wendegestells (2);
- Anheben der Rotornabe RN zur Montage an der Gondel der Windenergieanlage mittels des Hauptkrans (HK).

## Claims

1. Device for handling a rotor hub (RN) with the aid of cranes, wherein the rotor hub (RN) comprises a main body (3), a hub axis, three rotor-blade openings (3.2), each of which has a blade flange (3.3), and a shaft flange,
wherein the device comprises at least two load-bearing means which are designed in such a way that, when the device is raised, the rotor hub (RN) is turned from a transport position, with a substantially vertical orientation of the hub axis, into an erection position, with a substantially horizontal orientation of the hub axis,
**characterized in that**
a first load-bearing means consists of a support lug (1), and a second load-bearing means consists of a turning frame (2),
wherein the support lug (1) is detachably connected to the main body (3) of the rotor hub (RN) between two rotor-blade openings (3.2), and the turning frame (2) is detachably connected opposite the support lug (1) to a hole circle of the blade flange (3.3) of the third rotor-blade opening (3.2).

2. Device according to Claim 1, **characterized in that** the support lug (1) has a base plate (1.1) with bores (1.2) for screwing of the support lug (1) on the main body (3) of the rotor hub (RN), and has on the base plate (1.1) at a right angle to the latter an attachment plate (1.3) with an eye (1.4) for attachment to a main crane (HK).

3. Device according to Claim 1, **characterized in that** the turning frame (2) has two bottom plates (2.1, 2.2) which are opposite one another in a parallel manner and which, at one end, transition into two longitudinal members (2.3, 2.4) at a defined angle, and **in that** the longitudinal members (2.3, 2.4) are connected to one another by at least two transverse members (2.6, 2.7), wherein the transverse members (2.6, 2.7) are detachably connected to adaptor plates (4) for a connection to the blade flange (3.3) of the third rotor-blade opening (3.2), and **in that** the turning frame (2) has at least one eye (2.10) for attachment to a follow-up crane (NK).

4. Device according to Claim 3, **characterized in that** the transition between the bottom plates (2.1, 2.2) and the longitudinal members (2.3, 2.4) is provided with a rounding (2.5).

5. Device according to Claim 3 or 4, **characterized in that**
the bottom plates (2.1, 2.2) and the longitudinal members (2.3, 2.4) are connected to one another by vertical struts (2.9).

6. Device according to Claim 3, **characterized in that** the adaptor plates (4) are provided with bores (4.1) which correspond to the hole circle of the blade flange (3.3) of the third rotor-blade opening (3.2).

7. Device according to one of the preceding claims, **characterized in that**
the load-bearing means consists/consist of steel sheet.

8. Method for mounting a rotor hub (RN) on a nacelle of a wind turbine by way of a device for handling a rotor hub (RN) with the aid of cranes according to Claims 1 to 7, comprising the steps of:
- providing the rotor hub (RN) in a transport position, with a substantially vertical orientation of the hub axis;
- providing the support lug (1) and the turning frame (2), wherein the turning frame (2) is preassembled with adaptor plates (4) which correspond to the hole circle of the blade flange (3.3) of the third rotor-blade opening (3.2);
- mounting the support lug (1) on a corresponding perforated metal sheet (3.4) between two rotor-blade openings (3.2) on the main body (3) of the rotor hub (RN) ;
- mounting the turning frame (2) opposite the support lug (1) on the blade flange (3.3) of the third rotor-blade opening (3.2);
- attaching the support lug (1) to the main crane (HK) ;
- attaching the turning frame (2) to the follow-up crane (NK);
- raising the rotor hub (RN) by way of the main crane (HK) and simultaneously turning the rotor hub (RN) from the transport position, with a substantially vertical orientation of the hub axis, into an erection position, with a substantially horizontal orientation of the hub axis, with guidance of the follow-up crane (NK), wherein, when the rotor hub (RN) is raised, the turning frame (2) turns via the rounding (2.5) between the bottom plates (2.1, 2.2) and the longitudinal members (2.3, 2.4);
- setting the rotor hub (RN) down on the turning frame (2) at the required mounting angle;
- dismounting the turning frame (2);
- raising the rotor hub (RN) for mounting on the nacelle of the wind turbine by means of the main crane (HK).

## Revendications

1. Dispositif pour manipuler un moyeu de rotor (RN) à l'aide de grues, le moyeu de rotor (RN) comprenant un corps de base (3), un axe de moyeu, trois ouvertures de pale de rotor (3.2), qui comprennent chacune une bride de pale (3.3), et une bride d'arbre,
le dispositif comprenant au moins deux moyens de réception de charge, qui sont conçus de telle sorte que, lors du soulèvement du dispositif, le moyeu de rotor (RN) tourne d'une position de transport avec une orientation essentiellement verticale de l'axe de moyeu à une position d'érection avec une orientation essentiellement horizontale de l'axe de moyeu, **caractérisé en ce que** un premier moyen de réception de charge est constitué d'une patte porteuse (1) et un deuxième moyen de réception de charge est constitué d'un châssis de retournement (2),
la patte porteuse (1) étant reliée de manière amovible au corps de base (3) du moyeu de rotor (RN) entre deux ouvertures de pale de rotor (3.2), et
le châssis de retournement (2) étant relié de manière amovible à l'opposé de la patte porteuse (1) à un cercle perforé de la bride de pale (3.3) de la troisième ouverture de pale de rotor (3.2).

2. Dispositif selon la revendication 1, **caractérisé en ce que** la patte porteuse (1) présente une plaque de base (1.1) avec des perçages (1.2) pour visser la patte porteuse (1) sur le corps de base (3) du moyeu de rotor (RN) et, sur la plaque de base (1.1), à angle droit par rapport à celle-ci, une plaque de butée (1.3) avec un œil (1.4) pour l'accrochage à une grue principale (HK).

3. Dispositif selon la revendication 1, **caractérisé en ce que** le châssis de retournement (2) présente deux plaques de fond parallèles opposées (2.1, 2.2) qui, à une extrémité, se transforment en deux longerons (2.3, 2.4) selon un angle défini, et **en ce que** les longerons (2.3, 2.4) sont reliés entre eux par au moins deux traverses (2.6, 2.7), les traverses (2.6, 2.7) étant reliées de manière amovible à des plaques d'adaptation (4) pour une liaison à la bride de pale (3.3) de la troisième ouverture de pale de rotor (3.2), et **en ce que** le châssis de retournement (2) présente au moins un œil (2.10) pour l'accrochage à une grue de suivi (NK).

4. Dispositif selon la revendication 3, **caractérisé en ce que** la transition entre les plaques de fond (2.1, 2.2) et les longerons (2.3, 2.4) est pourvue d'un arrondi (2.5) .

5. Dispositif selon la revendication 3 ou 4, **caractérisé en ce que** les plaques de fond (2.1, 2.2) et les longerons (2.3, 2.4) sont reliés entre eux par des supports verticaux (2.9).

6. Dispositif selon la revendication 3, **caractérisé en ce que** les plaques d'adaptation (4) sont pourvues de perçages (4.1) qui correspondent au cercle perforé de la bride de pale (3.3) de la troisième ouverture de pale de rotor (3.2).

7. Dispositif selon l'une quelconque des revendications précédentes, **caractérisé en ce que** le ou les moyens de réception de charge sont constitués de tôle d'acier.

8. Procédé de montage d'un moyeu de rotor (RN) sur une nacelle d'une installation éolienne avec un dispositif pour manipuler un moyeu de rotor (RN) à l'aide de grues selon les revendications 1 à 7, comprenant les étapes suivantes :
- la fourniture du moyeu de rotor (RN) dans une position de transport avec une orientation essentiellement verticale de l'axe de moyeu ;
- la fourniture de la patte porteuse (1) et du châssis de retournement (2), le châssis de retournement (2) étant prémonté avec des plaques d'adaptation (4) correspondant au cercle perforé de la bride de pale (3.3) de la troisième ouverture de pale de rotor (3.2) ;
- le montage de la patte porteuse (1) sur une tôle perforée correspondante (3.4) entre deux ouvertures de pale de rotor (3.2) sur le corps de base (3) du moyeu de rotor (RN) ;
- le montage du châssis de retournement (2) à l'opposé de la patte porteuse (1) sur la bride de pale (3.3) de la troisième ouverture de pale de rotor (3.2) ;
- l'accrochage de la patte porteuse (1) à la grue principale (HK) ;
- l'accrochage du châssis de retournement (2) à la grue de suivi (NK) ;
- le soulèvement du moyeu de rotor (RN) par la grue principale (HK) et la rotation simultanée du moyeu de rotor (RN) de la position de transport avec une orientation essentiellement verticale de l'axe de moyeu à une position d'érection avec une orientation essentiellement horizontale de l'axe de moyeu sous le guidage de la grue de suivi (NK) ; lors du soulèvement du moyeu de rotor (RN), le châssis de retournement (2) tournant sur l'arrondi (2.5) entre les plaques de fond (2.1, 2.2) et les longerons (2.3, 2.4) ;
- le dépôt du moyeu de rotor (RN) sur le châssis de retournement (2) à l'angle de montage requis ;
- le démontage du châssis de retournement (2) ;
- le soulèvement du moyeu de rotor RN pour le montage sur la nacelle de l'installation éolienne au moyen de la grue principale (HK).
